(19) Europäisches Patentamt
European Patent Office
Office européen des brevets

(11) **EP 2 558 883 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **11703883.6**

(22) Anmeldetag: **16.02.2011**

(51) Int Cl.:
**G01S 17/36** (2006.01)     **G01S 7/491** (2006.01)

(86) Internationale Anmeldenummer:
**PCT/EP2011/052252**

(87) Internationale Veröffentlichungsnummer:
**WO 2011/128131 (20.10.2011 Gazette 2011/42)**

(54) **ENTFERNUNGSMESSGERÄT MIT HOMOGENISIERENDER MESSAUSWERTUNG**

DISTANCE MEASURING DEVICE HAVING HOMOGENIZING MEASUREMENT EVALUATION

APPAREIL DE MESURE DE DISTANCE À ÉVALUATION DE MESURE À EFFET HOMOGÉNÉISANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2010 DE 102010003843**

(43) Veröffentlichungstag der Anmeldung:
**20.02.2013 Patentblatt 2013/08**

(73) Patentinhaber: **Robert Bosch GmbH**
**70442 Stuttgart (DE)**

(72) Erfinder:
• **EISELE, Andreas**
**70771 Leinfelden-Echterdingen (DE)**
• **SCHMIDTKE, Bernd**
**71229 Leonberg (DE)**
• **SCHNITZER, Reiner**
**72762 Reutlingen (DE)**

(56) Entgegenhaltungen:
**EP-A1- 1 752 793        EP-A1- 1 944 622**
**WO-A1-2004/027359    US-A1- 2007 182 949**

**Beschreibung**

GEBIET DER ERFINDUNG

Die Erfindung betrifft ein Entfernungsmessgerät, insbesondere ein Entfernungsmessgerät zur optischen Entfernungsmessung.

HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, ausrichten. Von dem angepeilten Zielobjekt rücklaufendes Licht wird von dem Messgerät zumindest teilweise detektiert und zur Ermittlung der zu messenden Entfernung verwendet. Ein typischer Messbereich liegt hierbei bei Entfernungen von wenigen Zentimetern bis zu mehreren hundert Metern.

Aus der US 2007/0182949 A1 ist ein Entfernungsmessgerät bekannt, das eine Lichtquelle zum Beleuchten des Zielobjekts unter Verwendung kontinuierlich modulierten Lichts, einen Festkörperbildsensor, der ein Array aus Lawinenfotodioden aufweist, und eine Mehrzahl von Schaltkreisen zum Verarbeiten von Signalen, die von den Lawinenfotodioden ausgegeben wurden, aufweist, um Daten bereitzustellen, die von dem von dem Zielobjekt auf die Fotodioden reflektierten Licht abhängen. Die Schaltkreise weisen einen Multiplexer auf, der dazu ausgelegt ist, von den Lawinenfotodioden ausgegebene Detektionssignale während verschiedener Abtastzeitfenster in verschiedenen Zähler, die als Akkumulationseinrichtungen wirken, zu akkumulieren.

Die als Photonenzähler dienenden Lawinenfotodioden empfangen hierbei das vom Zielobjekt rücklaufende Licht sowie zusätzlich vorhandene Hintergrundstrahlung und erzeugen an ihrem Ausgang jeweils elektrische Impulse, wobei die zeitliche Impulsdichte mit der auftreffenden Lichtleistung korreliert.

Das Auslesen der Impulse von den Lawinenfotodioden erfolgt mit Hilfe einer Multiplexer-Anordnung. Diese kann synchron mit einer Modulation eines als Lichtquelle eingesetzten Lasers derart betrieben werden, dass die Impulse der Lawinenfotodioden in Abhängigkeit vom Zeitpunkt der jeweiligen Detektionsereignisse, das heißt beispielsweise eines in der Lawinenfotodiode absorbierten Photons, unterschiedliche digitale Zähler inkrementieren. Eine zeitliche Periode, mit der die Lichtquelle das Zielobjekt moduliert beleuchtet, wird dabei in eine Mehrzahl von Unter-Perioden unterteilt. Eine Unter-Periode entspricht hierbei einem Abtastzeitfenster, d.h. einem Zeitraum, während dessen Detektionssignale akkumuliert werden. Es wird eine der Anzahl von Unter-Perioden entsprechende Anzahl von digitalen Zählern bereitgestellt, wobei während jeder Unter-Periode jeweils ein entsprechend eineindeutig zugeordneter digitaler Zähler entsprechend der während der Unter-Periode empfangenen Detektionsimpulse inkrementiert wird. Auf diese Weise können über eine Gesamtmesszeit Detektionsereignisse kumuliert werden. Während eine einzelne Periode beispielsweise Zeitdauern im Bereich weniger Nanosekunden aufweisen kann, kann die Gesamtmesszeit viele solche Perioden umfassen und beispielsweise mehrere Millisekunden oder mehrere Sekunden dauern. Durch Kumulieren der Messereignisse in den digitalen Zählern kann eine Art Histogramm der Detektionsereignisse bezogen auf das zeitliche Auftreten von Detektionsereignissen innerhalb von Unter-Perioden aufgenommen werden. Sobald eine dem von der Lichtquelle abgestrahlten modulierten Licht aufgeprägte Modulation in den Zählerständen der digitalen Zähler mit ausreichender statistischer Genauigkeit vorliegt, kann über eine Phasenauswertung auf eine Laufzeit des Lichts zwischen Aussendung und Detektion und damit auf einen Abstand zwischen dem Entfernungsmessgerät und dem Zielobjekt geschlossen werden. Ein solches Prinzip einer Laserentfernungsmessung ist allgemein unter der Bezeichnung "Time of Flight Ranging" beispielsweise mit kontinuierlicher oder gepulster Modulation der Intensität des Laserstrahls bekannt.

Eine in dieser Weise arbeitende Auswerteeinrichtung, die innerhalb eines Entfernungsmessgerätes Detektionssignale von einem lichtempfindlichen Detektor empfängt und auswertet, indem sie die Detektionssignale mit einer Referenz synchronisiert registriert, das heißt entsprechend ihrem zeitlichen Auftreten bezogen auf die Periodizität des verwendeten modulierten Messlichts akkumuliert, wird auch als sogenannte "Binning-Architektur" bezeichnet. Eine derartige Binning-Architektur lässt sich beispielsweise mit einer Delay Locked Delay Line (DLL) realisieren.

Es wurde beobachtet, dass Entfernungsmessgeräte, die beispielsweise in der oben beschriebenen Art basierend auf wenigstens einem lichtempfindlichen Detektor, Multiplexer-Anordnungen und Binning-Architekturen arbeiten, nicht immer zufriedenstellende Messgenauigkeiten liefern können. Insbesondere wurde in EP 1 752 793 A1 ein Verfahren und eine Vorrichtung für redundante Abstandsmessung und für das Kompensieren eines Phasenversatzes vorgeschlagen.

OFFENBARUNG UND MÖGLICHE AUSFÜHRUNGSFORMEN DER ERFINDUNG

Es kann daher ein Bedarf an einem Entfernungsmessgerät bestehen, bei dem eine Messgenauigkeit erhöht ist, eine Zuverlässigkeit einer Messgenauigkeit verbessert ist, auf eine Kalibrierung verzichtet werden kann und/oder eine Messdauer verkürzt ist.

Ein solcher Bedarf kann mit einer Messvorrichtung gemäß Anspruch 1 erfüllt werden. Weitere Ausgestaltungen der Messvorrichtung sind in den abhängigen Ansprüchen angegeben.

Aspekte der vorgeschlagenen Messvorrichtung können als auf den folgenden Erkenntnissen und Ideen beruhend angesehen werden:

Es wurde als eine mögliche Quelle für Messfehler bzw. Messungenauigkeiten beispielsweise bei dem oben beschriebenen herkömmlichen Entfernungsmessgerät erkannt, dass ein Messergebnis stark von Variationen der zeitlichen Breiten von Abtastzeitfenstern und/oder Variationen von Detektionsempfindlichkeiten innerhalb verschiedener Abtastzeitfenster beeinflusst sein kann. Unterschiedliche Breiten der Abtastzeitfenster können, insbesondere wenn die Breitenunterschiede zufällig begründet und nicht bekannt sind, als systembedingte Fehlerquellen wirken und systematische Fehler bei der Ermittlung eines zu messenden Abstandes hervorrufen. Gleiches gilt, wenn innerhalb verschiedener Abtastzeitfenster die Detektionssignale mit unterschiedlichen Detektionsempfindlichkeiten detektiert werden. Solche systematischen Fehler sind von rauschbedingten Fehlern grundsätzlich zu unterscheiden, da sie sich nicht durch längere Messzeiten, sondern regelmäßig nur mit Hilfe einer genaueren Kalibrierung des Entfernungsmessgerätes oder durch eine spezielle Art der Auswertung von Detektionssignalen verringern lassen.

Es wird daher ein Entfernungsmessgerät vorgeschlagen, das zusätzlich eine Homogenisierungseinrichtung aufweist, mit Hilfe derer die von einer Empfangseinrichtung bereitgestellten digitalen oder analogen Detektionssignale in einer bestimmten homogenisierten Weise auswertbar sind, d.h. derart über eine Mehrzahl von mit der Empfangseinrichtung verbindbaren Akkumulationseinrichtungen verteilt werden, dass Variationen bei den Breiten der Abtastzeitfenster und/oder den Detektionsempfindlichkeiten innerhalb verschiedener Abtastzeitfenster keinen bzw. einen geringeren Einfluss auf das Gesamtmessergebnis haben.

Die vorgeschlagene Messvorrichtung zur optischen Entfernungsmessung weist dabei eine Sendeeinrichtung zur Aussendung periodisch modulierter optischer Messstrahlung auf ein Zielobjekt hin, eine Empfangseinrichtung zur Detektion von von dem Zielobjekt zurücklaufender optischer Messstrahlung und eine Auswerteeinrichtung zum Empfangen und Auswerten von Detektionssignalen der Empfangseinrichtung auf. Die Auswerteeinrichtung weist dabei eine Mehrzahl von Akkumulationseinrichtungen zum Akkumulieren von Detektionssignalen auf, wobei die Auswerteeinrichtung Detektionssignale während eines Abtastzeitfensters aus einer Mehrzahl von Abtastzeitfenstern zeitlich schematisch wechselnd, das heißt zum Beispiel zyklisch, zeitlich permutierend oder zeitlich gemäß einen beliebigen, vorgegebenen Schema verteilt, an einen zugeordneten Zähler aus der Mehrzahl von Zählern leitet. Dabei akkumuliert die zugeordnete Akkumulationseinrichtung die Detektionssignale während des Abtastzeitfensters. Ein über eine Gesamtmessdauer erfasstes Gesamtsignal wird von der Auswerteeinrichtung aus den in den Akkumulationseinrichtungen akkumulierten Detektionssignalen ermittelt.

Die vorgeschlagene Messvorrichtung weist zusätzlich eine Homogenisierungseinrichtung auf, die dazu ausgelegt ist, die zeitlich wechselnde Zuordnung von Akkumulationseinrichtungen aus der Mehrzahl von Akkumulationseinrichtungen zu Abtastzeitfenstern während der Gesamtmessdauer zu variieren.

Ein Grundgedanke hierbei ist, die von der Empfangseinrichtung aufgrund der auftreffenden rückreflektierten Messstrahlung bereitgestellten Detektionssignale nicht mehr in einer Art auszuwerten, dass sie starr synchronisiert mit der Periodizität des von der Sendeeinrichtung ausgesendeten Lichts jeweils Zählern zugeführt wird, deren zeitliche Lage innerhalb der Periodizität fest vorgegeben und während des gesamten Messvorgangs nicht variiert wird. Stattdessen soll die starre Synchronisierung ersetzt werden durch eine variable Synchronisierung, bei der während eines gesamten Messvorgangs Detektionssignale, die während einer bestimmten Phase innerhalb der Periode des ausgesendeten modulierten Lichtes aufgenommen werden, nicht immer von den gleichen Akkumulationseinrichtungen innerhalb der gleichen Abtastzeitfenster akkumuliert werden, sondern dass die Zuordnung von Abtastzeitfenstern und Akkumulationseinrichtungen während der Gesamtmessdauer variiert werden kann.

Mit anderen Worten ausgedrückt, herrschte bei herkömmlichen Abstandsmessgeräten, die ein auftreffendes moduliertes Lichtsignal beispielsweise mit einem ein digitales Detektionssignal liefernden Photonenzählers detektieren, stets eine zeitlich starre Zuordnung zwischen der Phase, innerhalb der das periodisch modulierte Licht empfangen wurde, und dem Abtastzeitfenster, innerhalb dessen die jeweiligen Detektionssignale einer vorbestimmten Akkumulationseinrichtung zugeführt wurden. Die Abtastzeitfenster weisen jedoch z.B. aufgrund der komplexen Technologie, die zum Triggern der Abtastzeitfenster eingesetzt wird, beispielsweise durch Prozess-, Spannungs- und Temperaturschwankungen, nicht unbedingt alle eine gleiche zeitliche Breite auf, wie dies anzustreben wäre. Außerdem kann die Detektionsempfindlichkeit innerhalb verschiedener Abtastzeitfenster unterschiedlich sein. Es konnte daher dazu kommen, dass für den Fall, dass nur zeitlich konstantes Hintergrundlicht und keine modulierte Messstrahlung auf die Empfangseinrichtung auftrafen, dennoch variierende akkumulierte Detektionssignale in den Akkumulationseinrichtungen registriert wurden. Selbst wenn angenommen wird, dass die Detektionsempfindlichkeit in allen Abtastzeitfenstern gleich ist, können die zeitlich mit konstanter Rate auftreffenden Photonen zwar eine konstante Detektionssignaldichte bewirken, die Detektionssignale können aber in den jeweiligen Akkumulationseinrichtungen über Zeitdauern akkumuliert werden, die den unterschiedlich großen Abtastzeitfenstern entsprechen. Alternativ, für den Fall, dass die Detektionsempfindlichkeit in verschiedenen Abtastzeitfenstern unterschiedlich ist, kann die Detektionssignaldichte trotz zeitlich mit konstanter Rate auftreffenden Photonen variieren, so dass in den Abtastzeitfenstern unterschiedlich viele Detektionssignale in den zugeordneten Akkumulationseinrichtungen akkumuliert werden. Beides kann dazu führen, dass von der Auswerteeinrichtung trotz konstanten Lichteinfalls eine Variation der in den Akkumulationseinrichtungen akkumulierten Detektionssignale erkannt wird. Diese Variation kann größer sein als ein von einer modulierten optischen Messstrahlung bewirktes Messsignal.

Es wird nun vorgeschlagen, die zeitlich schematisch wechselnde Zuordnung der Akkumulationseinrichtungen zu den einzelnen Abtastzeitfenstern während der Gesamtmessdauer zu variieren. Mit anderen Worten können beispielsweise Detektionssignale, die innerhalb einer ersten Phase der periodisch modulierten Messstrahlung detektiert werden, nicht mehr stets während ein und desselben ersten Abtastfensters immer in derselben Akkumulationseinrichtung akkumuliert werden. Stattdessen kann eine Gesamtmessdauer in mehrere Teilmessdauern unterteilt sein und innerhalb einer Teilmessdauer eine feste Phasenbeziehung zwischen der periodisch modulierten Messstrahlung und einer zyklischen Zuordnung der Akkumulationseinrichtungen zu Abtastfenstern bestehen.

Mit anderen Worten ähnelt das Auswerteverfahren innerhalb einer Teilmessdauer der oben beschriebenen, herkömmlichen Auswertung der Detektionssignale. Zwischen den einzelnen Teilmessdauern können diesbezüglich jedoch Unterschiede dahingehend bestehen, dass zwischen der Phasenbeziehung zwischen der periodisch modulierten Messstrahlung und der zyklischen Zuordnung der Akkumulationseinrichtungen zu Abtastfenstern eine Phasenverschiebung bestehen kann. Mit anderen Worten unterscheidet sich die Phasenbeziehung zwischen der periodisch modulierten Messstrahlung und der zyklischen Zuordnung der Akkumulationseinrichtungen zu Abtastfenstern innerhalb einer ersten Teilmessdauer von derjenigen Phasenbeziehung innerhalb einer zweiten Teilmessdauer, usw. Eine relative Phasenverschiebung zwischen den einzelnen Teilmessdauern kann dabei beispielsweise $2\pi/n$ sein, wobei n die Anzahl von Teilmessdauern wiedergibt.

Die Anzahl an Abtastzeitfenstern kann hierbei gleich der Anzahl an Akkumulationseinrichtungen sein und kann ferner der Anzahl von Teilmessdauern entsprechen. Beispielsweise können acht Abtastzeitfenster und acht Akkumulationseinrichtungen vorgesehen sein, die innerhalb von acht Teilmessdauern einander jeweils in anderer Weise zugeordnet sind. Beispielsweise können während einer ersten Teilmessdauer Messsignale aus einer ersten Phase des modulierten Messlichts innerhalb eines ersten Abtastzeitfensters einer ersten Akkumulationseinrichtung zugeleitet werden, wohingegen in einer zweiten Teilmessdauer die Detektionssignale aus der ersten Phase des modulierten Messlichts der ersten Akkumulationseinrichtung während eines zweiten Abtastzeitfensters zugeleitet werden, usw.

Vorzugsweise wird die zeitlich wechselnde Zuordnung von jeweils einem der Zähler zu jeweils einem der Abtastzeitfenster von der Homogenisierungseinrichtung derart variiert, dass über die Gesamtmessdauer hinweg zumindest mehrere der Akkumulationseinrichtungen, vorzugsweise jede der Akkumulationseinrichtungen, etwa gleich häufig jedem der Abtastzeitfenster zugeordnet ist. Hierdurch kann vorzugsweise erreicht werden, dass Detektionssignale, die innerhalb einer spezifischen Phase des periodisch modulierten Messlichts detektiert werden, homogen über alle zur Verfügung stehenden Abtastzeitfenster hin von den Akkumulationseinrichtungen akkumuliert werden. Dadurch lässt sich vorzugsweise erreichen, dass eine Abweichung der zeitlichen Breite von Abtastzeitfenstern oder eine Abweichung einer Detektionsempfindlichkeit von einem Durchschnittswert nicht mehr nur zu einer Akkumulation von Detektionssignalen in einer einzigen Akkumulationseinrichtung führt, sondern stattdessen dieses Abtastzeitfenster nacheinander von allen oder zumindest mehreren der zur Verfügung stehenden Akkumulationseinrichtungen verwendet wird, um in dessen Zeitdauer Detektionssignale zu akkumulieren.

Auf diese Weise kann eine Homogenisierung hinsichtlich der zeitlichen Breite der Abtastzeitfenster erreicht werden. Analog kann auch eine Homogenisierung hinsichtlich unterschiedlicher Empfindlichkeiten innerhalb der Abtastzeitfenster erreicht werden.

Insbesondere für den Fall, dass die Anzahl an Abtastzeitfenstern und die Anzahl an Akkumulationseinrichtungen ungleich ist, kann eine Periodendauer einer sich zyklisch wiederholenden Sequenz der Anzahl von Abtastzeitfenstern sich von der Periodendauer der modulierten Messstrahlung unterscheiden. Auch auf diese Weise kann erreicht werden, dass ein bestimmtes Abtastzeitfenster nicht stets die gleiche Phase der modulierten Messstrahlung an die gleiche Akkumulationseinrichtung weiterleitet wird, sondern diese Zuordnung aufgrund der unterschiedlichen Periodendauern der Summe der Abtastzeitfenster einerseits und der modulierten Messstrahlung andererseits zeitlich variabel ist. Es kann so wiederum zu der gewünschten Homogenisierung beim Abtasten der Detektionssignale kommen.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu.

Fig. 1 zeigt eine Messvorrichtung zur optischen Entfernungsmessung gemäß einer Ausführungsform der vorliegenden Erfindung.

Fig. 2 zeigt eine schematische Darstellung von digitalen Gate-Signalen einer Binning-Architektur, wie sie in einer erfindungsgemäßen Messvorrichtung verwendet werden können.

Fig. 3 zeigt beispielhaft eine zeitliche Abhängigkeit einer Zählrate eines als Empfangseinrichtung verwendeten Photonenzählers bei Beleuchtung mit modulierter Messstrahlung.

Fig. 4 zeigt beispielhaft Variationen einer normalisierten Breite von Abtastzeitfenstern.

Fig. 5 veranschaulicht ein Verfahren zur zeitlich wechselnden Zuordnung von Zählern zu Abtastzeitfenstern, wie es in einer Messvorrichtung gemäß einer Ausführungsform der vorliegenden Erfindung eingesetzt werden kann.

Fig. 6 veranschaulicht ein alternatives Verfahren zur zeitlich wechselnden Zuordnung von Zählern zu Abtastzeitfenstern, wie es in einer Messvorrichtung gemäß einer Ausführungsform der vorliegenden Erfindung eingesetzt werden kann.

## DETAILIERTE BESCHREIBUNG VON AUSFÜHRUNGSFORMEN

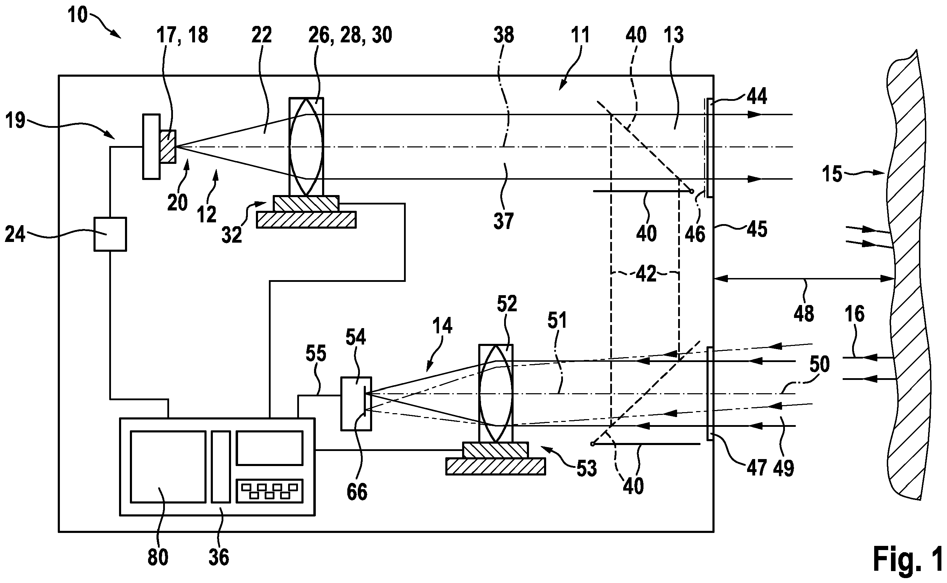

In Fig. 1 ist in schematischer Weise eine erfindungsgemäße Messvorrichtung 10 in Form eines optischen Entfernungsmessers mit den wichtigsten Komponenten zur Beschreibung ihrer Funktion dargestellt. Die Erfindung selbst ist jedoch nicht auf den Bereich der optischen Entfernungsmessung beschränkt.

Die Messvorrichtung 10 weist ein Gehäuse 11 auf, in dem eine Sendeeinrichtung 12 zur Aussendung optischer Messstrahlung 13 sowie eine Empfangseinrichtung 14 zur Detektion von von einem Zielobjekt 15 zurücklaufender Messstrahlung 16 angeordnet sind.

Die Sendeeinrichtung 12 beinhaltet eine Lichtquelle, die im dargestellten Ausführungsbeispiel durch eine Halbleiter-Laserdiode 18 realisiert ist. Die Laserdiode 18 sendet einen Laserstrahl 20 in Form eines für das menschliche Auge sichtbaren Lichtbündels 22 aus. Die Laserdiode 18 wird dazu über ein Steuergerät 24 betrieben, das durch eine entsprechende Elektronik eine zeitliche Modulation eines elektrischen Eingangssignals 19 der Laserdiode 18 erzeugt. Durch eine derartige Modulation des Diodenstromes lässt sich erreichen, dass die optische Messstrahlung 13, welche zur Entfernungsmessung genutzt wird, ebenfalls in gewünschter Weise zeitlich in ihrer Intensität moduliert wird.

Insbesondere während eines Entfernungsmessvorganges durchläuft das Laserstrahlbündel 20 anschließend eine Kollimationsoptik 26 in Form eines Objektivs 28, das in Fig. 1 in vereinfachter Weise in Form einer einzelnen Linse dargestellt ist. Nach Durchlaufen des Objektivs 28 ergibt sich ein beispielsweise Amplitudenmoduliertes Signal der Messstrahlung 13 in Form eines nahezu parallelen Lichtbündels 37, das sich entlang einer optischen Achse 38 der Sendeeinheit 12 ausbreitet.

Wird mit der Messvorrichtung 10 eine Entfernungsmessung durchgeführt, verlässt die Messstrahlung 13 das Gehäuse 11 der Messvorrichtung durch ein optisches Fenster 44 in der Stirnwand 45 der Messvorrichtung 10. Die Öffnung des optischen Fensters 44 kann beispielsweise durch einen Shutter 46 gesichert sein. Zur eigentlichen Messung wird die Messvorrichtung 10 dann auf ein Zielobjekt 15 hin ausgerichtet, dessen Entfernung 48 zur Messvorrichtung 10 ermittelt werden soll. Die an dem gewünschten Zielobjekt 15 reflektierte oder gestreute Strahlung bildet zurücklaufende optische Messstrahlung 16 in Form eines zurücklaufenden Strahlenbündels 49 bzw. 50, das zu einem gewissen Teil wieder in die Messvorrichtung 10 zurückgelangt. In Fig. 1 sind exemplarisch zur Verdeutlichung zwei zurücklaufende Messstrahlenbündel 49 bzw. 50 für zwei unterschiedliche Zielobjektentfernungen 48 eingezeichnet. Durch ein Eintrittsfenster 47 an der Stirnseite 45 der Messvorrichtung 10 wird die zurücklaufende Messstrahlung 16 in die Messvorrichtung 10 eingekoppelt und trifft dann, wie in Fig. 1 dargestellt, auf eine Empfangsoptik 52.

Die Empfangsoptik 52, die in Fig. 1 ebenfalls nur schematisch durch eine einzelne Linse symbolisiert ist, fokussiert das Strahlenbündel der zurücklaufenden Messstrahlung 16 auf die Detektionsfläche 66 eines in der Empfangseinrichtung 14 vorgesehenen Empfangsdetektors 54. Der Detektor 54 weist zur Detektion der optischen Messstrahlung ein Pixel oder eine Vielzahl von Pixeln auf. Jedes der Pixel weist mindestens eine lichtempfindliche SPAD (Single Photon Avalanche Diode) auf, die als digitaler Photonendetektor wirkt. Durch die in der Detektionsfläche 66 vorgesehenen SPADs, wird die einfallende zurücklaufende Messstrahlung 16 in ein elektrisches Signal 55 umgewandelt und der weiteren Auswertung in der Auswerteeinrichtung 36 zugeführt. Das elektrische Signal 55 kann dabei aufgrund inhärenter Eigenschaften der SPADs als digitales Detektionssignal angesehen werden, das eine Zählrate von auf die jeweiligen Pixel der Detektionsfläche 66 auftreffender Photonen wiedergibt.

Die Auswerteeinrichtung 36 kann die von einer SPAD generierten Detektionssignale geeignet aufsummieren und daraus ein Gesamtsignal erzeugen, das einer zeitabhängigen Intensität des auf die SPAD auftreffenden Lichtsignals bzw. der Lichtintensität entspricht. Indem dieses Gesamtsignal in Relation zu einem Anregungssignal gesetzt wird, das den zeitlichen Verlauf der von der Sendeeinrichtung 12 emittierten Photonenrate angibt, kann auf eine Photonenflugzeit von der Sendeeinrichtung 12 hin zu dem Zielobjekt 15 und wieder zurück zu der Empfangseinrichtung 13 geschlossen werden. Falls die Sendeeinrichtung 12 das ausgesendete Licht beispielsweise sinusartig periodisch moduliert, kann eine Flugzeit aus einem Phasenunterschied zwischen der ausgesendeten und der detektierten Messstrahlung ermittelt werden.

Im Detail kann die Auswerteeinrichtung 36 die von der Empfangseinrichtung 14 empfangenen digitalen Detektionssignale während verschiedener Abtastzeitfenster verschiedenen digitalen Zählern zuleiten. Die Zähler wirken hierbei als Akkumulationseinrichtungen. Die Auswerteeinrichtung wird hierin teilweise auch als "Binning-Architektur" bezeichnet und die Abtastzeitfenster werden teilweise als "Bin-Breiten" bezeichnet. Die Summe der Abtastzeitfenster kann hierbei der Periode der modulierten Messstrahlung entsprechen. Mit anderen Worten wird während eines Abtastzeitfensters ein sich periodisch wiederholender Phasenbereich des periodisch modulierten Detektionssignals erfasst und die entsprechenden digitalen Detektionssignale in Zählern akkumuliert. Hierzu können die Detektionssignale, zeitlich korreliert mit der Periodizität des Ansteuerungssignals an die Laserdiode 18, während der verschiedenen Abtastzeitfenster über Multiplexer an entsprechend zugeordnete digitale Zähler geleitet werden. Der Vorgang der variierenden Zuordnung von Zählern und Abtastzeitfenstern wird innerhalb der Auswerteeinrichtung von einer Homogenisierungseinrichtung 80 gesteuert. Aus den über viele Perioden kumulierten Zählergebnissen der digitalen Zähler kann dann auf den Phasenunterschied zwischen der ausgesendeten und der detektierten Messstrahlung geschlossen und somit die gewünschte Entfernung bestimmt werden.

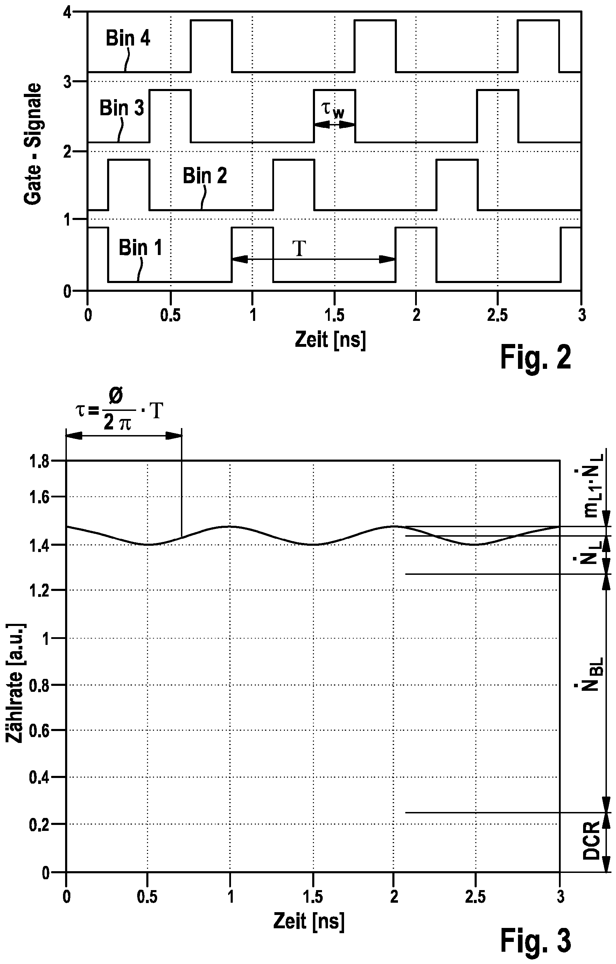

Die Figur 2 zeigt eine schematische Darstellung digitaler Gate-Signale einer Binning-Architektur am Beispiel von vier Abtastfenstern. Die Größe und die Stabilität der tatsächlich realisierten Bin-Breiten kann eine besonders große systematische Fehlerquelle darstellen. Eine Abweichung der Bin-Breiten von ihren Soll-Wert kann sich insbesondere bei starker Hintergrundbeleuchtung erheblich auf das Messergebnis auswirken. Ähnlich kann sich auch eine Variation der Detektionsempfindlichkeiten verschiedener Bins stark auf das Messergebnis auswirken.

Die die Bin-Breiten oder Abtastzeitfenster steuernden Steuersignale brauchen dabei nicht den in Fig. 2 dargestellten, rechteckförmigen zeitlichen Verlauf haben. Auch andere Zeitverläufe wie beispielsweise sinusartige Zeitverläufe der Steuersignale sind möglich.

Im Folgenden wird ein möglicher Vorteil der Erfindung gemäß einer Ausführungsform anhand eines Beispiels mit kontinuierlich modulierter Laserstrahlung, im Speziellen mit sinusförmiger Modulation, beschrieben. Mit den in Figur 3 gegebenen Bezeichnungen wird die Modulation M auf der Empfangsseite durch

$$(1) \qquad M \equiv \frac{m_{L1} \cdot \dot{N}_L}{\dot{N}_L + \dot{N}_{BL} + DCR}$$

definiert. Hierbei ist $m_{L1}$ ein Faktor, der die Modulationstiefe der geräteseitig ausgesandten Laserstrahlung beschreibt, $N_L$ ist die zeitlich gemittelte Zählrate (in Counts/s) bezüglich des detektierten Laserlichtes, $N_{BL}$ ist die zeitlich gemittelte Zählrate bezüglich Hintergrundstrahlung und DCR ist eine Dunkelzählrate des Detektors. Unter typischen Messbedingungen kann die Modulation beispielsweise Werte im Prozent-Bereich annehmen.

Weiter ergibt eine Abschätzung der Fehlerfortpflanzung des Bin-Breiten-Fehlers $\delta\tau_w$ auf den Phasenfehler $\Delta\phi$ folgenden Zusammenhang:

$$(2) \qquad \Delta\phi \propto \frac{1}{M} \cdot \frac{\delta\tau_w}{T}$$

wobei T die Periode der modulierten Messstrahlung wiedergibt.

Der Phasenfehler ist antiproportional zur Modulation des unter Messbedingungen empfangenen Signals und proportional zur relativen Genauigkeit der Bin-Breite bezogen auf die Modulationsperiode. Damit wird die hohe Sensitivität des Systems auf Abweichungen der Bin-Breiten vom Sollwert deutlich: Bei starker Hintergrundbeleuchtung erfordert eine gleichbleibende Phasengenauigkeit eine höhere Genauigkeit bei der Bin-Breiten-Kalibrierung oder ein geeignetes Auswerteverfahren basierend beispielsweise auf der hierin beschriebenen Homogenisierung von Abtastzeitfenstern.

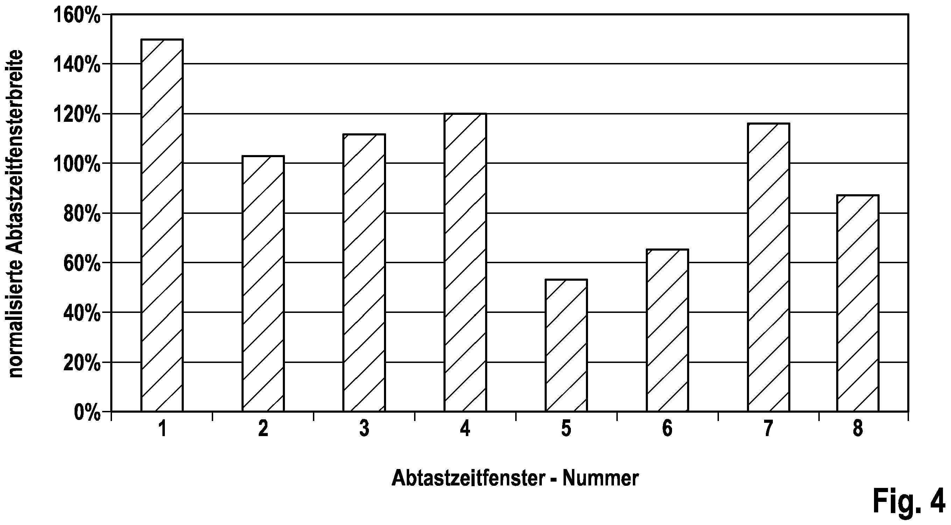

Fig. 4 zeigt am Beispiel eines Binning-Schemas mit acht Abtastzeitfenstern, wie die zeitliche Breite der einzelnen Abtastzeitfenster variieren kann. Die Mehrzahl von Abtastzeitfenstern 1 bis 8 kann eine Periode des modulierten Messstrahls sukzessive abtasten, wobei innerhalb jedes Abtastzeitfensters die erfassten Detektionssignale in einen zu diesem Zeitpunkt zugeordneten Zähler geleitet und in diesem akkumuliert werden. Die zeitliche Breite eines Abtastfensters kann dabei einen Bruchteil, zum Beispiel ein n-tel (mit n = Anzahl der Abtastzeitfenster) betragen. Für den Fall, dass die Messstrahlung mit Frequenzen im Bereich von beispielsweise 1 GHz moduliert wird, ergibt sich dabei, dass die zeitliche Breite eines Abtastzeitfensters wesentlich kürzer als 1 ns, beispielsweise im Bereich von 100 ps, sein kann. Da, wie oben erläutert die letztendlich zu detektierende modulierte Messstrahlung lediglich etwa 1% der gesamten auf die Empfangseinrichtung auftreffenden Strahlung ausmachen kann, kann bereits eine Variation der Breite der Abtastzeitfenster von weniger als 1 ps das Messergebnis signifikant beeinflussen.

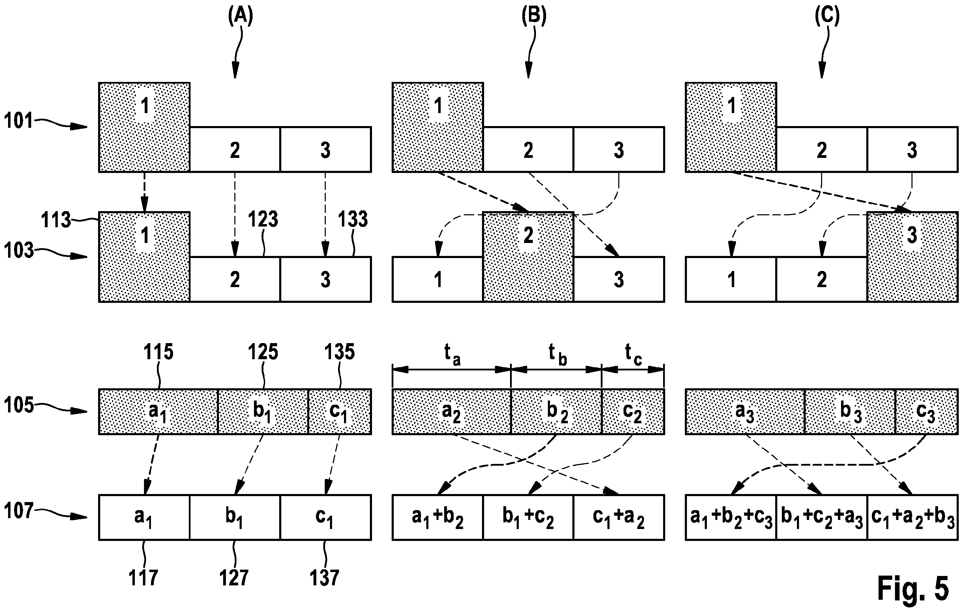

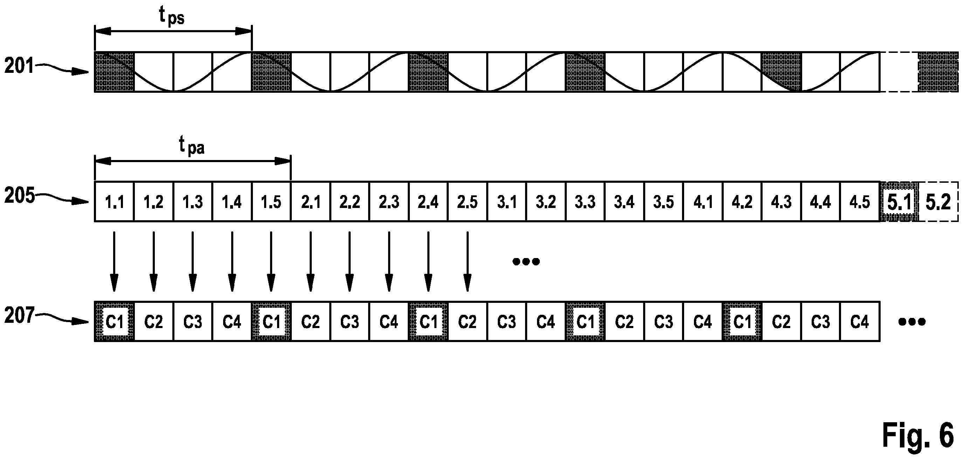

Mit Bezug auf die Fig. 5 und 6 werden nun Ausführungsformen der Erfindung beschrieben, bei denen mit Hilfe eines geeigneten Verfahrens der variierenden Zuordnung von digitalen Zählern und Abtastzeitfenstern eine weitgehend homogene Verteilung des Hintergrundlicht-Detektionssignals über alle verwendeten Abtastzeitfenster erreicht werden kann, wobei das zu messende, modulierte Messstrahl-Detektionssignal weiterhin ermittelt werden kann.

Für n Abtastzeitfenster kann das vorgeschlagene Homogenisierungsverfahren in einer ersten Ausgestaltung aus beispielsweise n=3 Teilmessungen (A), (B) und (C) bestehen, wie dies in Fig. 5 veranschaulicht ist. Jede Teilmessung kann aus einer mehrfachen periodischen Wiederholung bestehen. Die Teilmessungen können gleiche oder differierende Teilmessdauern haben und erfolgen vorzugsweise auf einer Zeitskala, auf der sich die Hintergrundbeleuchtung nicht signifikant ändert.

In einer ersten Teilmessung (A) wird ein Sendesignal 103 einer periodisch modulierten optischen Messstrahlung mit unverschobener Phasenlage erzeugt. Das unverschobene Signal ist in Fig. 5 jeweils in der Zeile 101 dargestellt. Das Sendesignal 103 wird nach der Reflexion an dem Zielobjekt dann als Detektionssignal innerhalb der durch die Abtastzeitfenster 115, 125, 135 definierten Zeitintervalle detektiert, wobei die Abtastzeitfenster 115, 125, 135 eine Sequenz 105 von Abtastzeitfenstern bilden und verschiedene zeitliche Breiten $t_a$, $t_b$, $t_c$ haben. Jedem einzelnen Abtastfenster wird somit eine detektierte Anzahl von einzelnen Detektionssignalen zugeordnet, die in Abbildung 5 mit $a_1$, $a_2$, $a_3$, $b_1$, $b_2$ ... $c_3$ bezeichnet sind. Die einzelnen Detektionssignale werden während des Abtastzeitfensters in temporär zugeordneten Zählern 117, 127, 137 einer Mehrzahl von Zählern 107 akkumuliert. Zwischen den Zählern 107 und den Abtastzeitfenstern 105 besteht eine ein-eindeutige veränderbare Zuordnung.

In einer zweiten Teilmessung (B) wird das Sendesignal 103 mit einer Phasenverschiebung von $2\pi/n$ erzeugt. Das Sendesignal wird nach Reflexion an dem Zielobjekt wiederum von der Empfangseinrichtung detektiert, wobei die Detektionssignale innerhalb der Abtastfenster 105 wiederum in den zu diesem Zeitpunkt zugeordneten Zählern aufkumuliert werden. Hierbei ist die Zuordnung zwischen Abtastfenstern 115, 125, 135 und Zählern 117, 127, 137 bei der zweiten Teilmessung um -1 zyklisch verschoben, wie in Fig. 5 durch Pfeile angedeutet. Somit werden beispielsweise in dem ersten Zähler 117 die Detektionssignale $b_2$, die innerhalb des zweiten Abtastzeitfensters 125 detektiert werden, akkumuliert, so dass dieser Zähler am Ende der zweiten Teilmessung (B) den Inhalt $a_1 + b_2$ aufweist.

In einer dritten Teilmessung (C) wird ein Sendesignal 103 mit einer Phasenverschiebung von 2 x $2\pi/n$ erzeugt. Entsprechend werden die innerhalb der Abtastzeitfenster 105 detektierten Detektionssignale in die zu diesem Zeitpunkt zugeordneten Zähler aufkumuliert, wobei die Zuordnung zwischen Abtastfenstern 115, 125, 135 und Zählern 117, 127, 137 bei der dritten Teilmessung um -2 zyklisch verschoben ist. Somit werden beispielsweise in dem ersten Zähler 117 die Detektionssignale $c_3$, die innerhalb des dritten Abtastzeitfensters 135 detektiert werden, akkumuliert, so dass dieser Zähler am Ende der dritten Teilmessung (C) den Inhalt $a_1 + b_2 + c_3$ aufweist.

Jeder der Zähler 117, 127, 137 hat nun genau einmal die innerhalb eines jeden Abtastzeitfensters detektierten Detektionssignale erhalten und aufsummiert. Der Betrag des in jedem Zähler aufsummierten gleich verteilten Hintergrundlichts ist somit unabhängig von der zeitlichen Breite des Abtastzeitfensters homogen verteilt. Gleichzeitig wird das Sendesignal 103 nahezu phasengetreu abgebildet. D.h., in dem dargestellten Beispiel, wird das Sendesignal 103 und die Zuordnung der Abtastzeitfenster derart zwischen den einzelnen Teilmessungen phasenverschoben, dass immer dasjenige Abtastzeitfenster mit dem ersten Zähler 117 verbunden ist, während dem das phasenverschobene Sendesignal 103 detektiert wird.

Zusammenfassend wird bei dem dargestellten Ausführungsbeispiel ein Sendesignal 103 während verschiedener Teilmessungen (A), (B), (C) in Richtung eines Zielobjekts ausgesendet, dort reflektiert und von einer Empfangseinrichtung, die beispielsweise als Photonenzähler in Form einer SPAD (Single Photon Avalanche Diode) ausgestaltet sein kann, detektiert. Das Sendesignal 103 wird bezogen auf ein unverschobenes Signal (101) während der einzelnen Teilmessungen (A), (B), (C) sukzessive in seiner Phase verschoben. Während Abtastzeitfenstern 115, 125, 135 werden die Detektionssignale zugeordneten Zählern 117, 127, 137 zugeleitet. Eine Zuordnung der Zähler 117, 127, 137 zu den Abtastfenstern 115, 125, 135 kann zwischen den einzelnen Teilmessungen (A), (B), (C) variieren. Auf diese Weise kann erreicht werden, dass Hintergrundlicht homogen über alle Zähler 117, 127, 137 verteilt wird, wohingegen das Sendesignal 103 nur in spezifischen Zählern 117 akkumuliert wird. Messfehler aufgrund ungleicher zeitlicher Breiten der Abtastzeitfenster oder aufgrund unterschiedlicher Messempfindlichkeiten innerhalb verschiedener Abtastzeitfenster können hierdurch minimiert werden.

Analog zur Homogenisierung der unterschiedlichen zeitlichen Breiten der Abtastzeitfenster kann auch eine Homogenisierung hinsichtlich unterschiedlicher Detektionsempfindlichkeiten erfolgen.

Die relative Phasenverschiebung zwischen den einzelnen Teilmessungen kann idealisiert, jedoch nicht notwendigerweise genau $2\pi/n$ betragen. Eine Abweichung hiervon kann beispielsweise auftreten, wenn Sendesignal und Abtastzeitfenster vom gleichen nicht-idealen Binning-Schema abgeleitet werden. Die Phasenverschiebung kann, muss aber nicht zyklisch realisiert sein. Permutationen oder Zufallsschemata sind denkbar.

Eine vorteilhafte Wirkung der hierin vorgeschlagenen Homogenisierung kann insbesondere dann erreicht werden, wenn eine Zuordnung zwischen Abtastzeitfenstern und Zählern mit einer Phasenverschiebung des Sendesignals derart verknüpft ist, dass die Detektionssignale aller Abtastfenster nach einer endlichen Gesamtmessdauer in etwa gleich verteilt in alle der zur Verfügung stehenden Zähler aufkumuliert werden.

Symmetriebetrachtungen hinsichtlich der Breite der Abtastzeitfenster können die Anforderung, dass jedes Abtastzeitfenster jeden Zähler inkrementiert, lockern. Sind beispielsweise die Abtastzeitfenster der ersten und der zweiten Hälfte einer Modulationsperiode identisch, so kann die Anzahl von Vertauschungen bzw. Phasenverschiebungen halbiert werden. Beispielsweise bei gerader Anzahl von Abtastzeitfenstern kann die Messung auf zwei um $\pi$ phasenverschobene Teilmessungen reduziert werden. Dies kann dazu führen, dass die Zählerstände durch Hintergrundlicht in der ersten und zweiten Hälfte einer Modulationsperiode gleich sind.

In dem in Fig. 6 dargestellten, weiteren Ausführungsbeispiel ist das Sendesignal 201 in der Phase konstant. Stattdessen werden die Abtastzeitfenster 205 in der Phase relativ zum Sendesignal 201 geschoben. Die Anzahl n von Zählern 207 (im dargestellten Beispiel ist n = 4) bzw. von Unterperioden des Sendesignals 201 (im dargestellten Beispiel ist n = 4) unterscheidet sich hierbei von der Anzahl m von Abtastzeitfenstern 205 (im dargestellten Beispiel ist m = 5). Anders ausgedrückt ist die Periodendauer tps der modulierten Messstrahlung 201 anders als die Periodendauer tpa der sich zyklisch wiederholenden Sequenz 205 von Abtastzeitfenstern. Dadurch, dass sich die Anzahl m von Abtastzeitfenstern 205 von einer Anzahl n von Zählern 207 unterscheidet, kann erreicht werden, dass jedes der Abtastzeitfenster im Verlauf einer Gesamtmessung, die sich über viele Wiederholungen der Sequenz von Abtastzeitfenstern erstreckt, Detektionssignale an jeden der Zähler liefert. Das dem Hintergrundlicht entsprechende Gesamtdetektionssignal wird somit homogen über alle Zähler verteilt, wohingegen das dem modulierten Messlicht entsprechende Detektionssignal jeweils in denselben Zähler geleitet und dort akkumuliert wird.

Während bei den oben beschriebenen Ausführungsformen jeweils von einer Empfangseinrichtung mit einem einzigen, digitalen Photonenzähler, beispielsweise in Form einer SPAD ausgegangen wurde, kann die Empfangseinrichtung alternativ auch mehrere Lichtdetektoren aufweisen. Die Lichtdetektoren können digital oder analog arbeiten. Beispielsweise kann ein Pixelarray von mehreren digital arbeitenden SPADs oder ein analog arbeitender CCD-Chip mit mehreren Pixeln verwendet werden. Hierdurch kann eine 2D oder 3D Kamera realisiert werden. Detektionssignale von jeweils einem der Pixel können während eines zugeordneten Abtastzeitfensters in einer Akkumulationseinrichtung akkumuliert werden. Für den Fall, dass die einzelnen Pixel verschiedene Detektionsempfindlichkeiten aufweisen, kann mit Hilfe der beschriebenen Homogenisierung ein negativer Einfluss dieser verschiedenen Detektionsempfindlichkeiten auf das Gesamtmessergebnis erheblich reduziert werden.

Ein durch die hierin beschriebene Homogenisierung von Abtastzeitfenstern bzw. Detektionsempfindlichkeiten zu erzielender Vorteil kann in der Verkürzung der Gesamtmessdauer liegen, da auf eine Kalibrierung der Abtastzeitfenster bzw. der Binning-Architektur verzichtet werden kann. Alternativ kann bei zusätzlicher Kalibrierung eine erhöhte Messgenauigkeit erreicht werden. Dies kann insbesondere bei Messvorrichtungen, bei denen eine hohe Messgenauigkeit gefordert wird und daher Messstrahlung mit hohen Modulationsfrequenzen eingesetzt wird, von Vorteil sein, da die bei derart hohen Modulationsfrequenzen, zum Beispiel im Bereich von 1 GHz oder mehr, notwendige Kalibrierung insbesondere bei einem geringen Signal-Rausch-Verhältnis sehr lange dauern kann, beispielsweise länger als die eigentliche Entfernungsmessung.

Ein weiterer Vorteil kann in einer geringeren Leistungsaufnahme bestehen, da gegebenenfalls keine gesonderte Messung zur Kalibrierung erforderlich sein kann.

Ein weiterer Vorteil kann der geringe schaltungstechnische Aufwand, der für eine Realisierung der Homogenisierungseinrichtung notwendig ist, sein. Beispielsweise können die Abtastzeitfenster und die Modulation der Messstrahlung von einer gemeinsamen Quelle abgeleitet werden.

Weiterhin kann auch bei veränderlichen Konditionen wie zum Beispiel einer Temperaturdrift auf eine Hintergrundlicht-Kalibrierung verzichtet werden.

## Patentansprüche

1.   Messvorrichtung (10) zur Entfernungsmessung, insbesondere handgehaltene Messvorrichtung zur optischen Entfernungsmessung, aufweisend:

eine Sendeeinrichtung (12) zur Aussendung periodisch modulierter optischer Messstrahlung (13) auf ein Zielobjekt (15) hin; eine Empfangseinrichtung (14) zur Detektion von von dem Zielobjekt (15) zurücklaufender optischer Messstrahlung (16), wobei die Empfangseinrichtung (14) wenigstens eine SPAD aufweist; und eine Auswerteeinrichtung (36) zum Empfangen und Auswerten von Detektionssignalen der Empfangseinrichtung (14);

wobei die Auswerteeinrichtung (36) eine Mehrzahl von Akkumulationseinrichtungen (107, 207) zum Akkumulieren von Detektionssignalen aufweist; wobei die Auswerteeinrichtung (36) Detektionssignale während eines Abtastzeitfensters (115, 125, 135) aus einer Mehrzahl (105) von Abtastzeitfenstern zeitlich schematisch wechselnd, insbesondere zyklisch, zeitlich permutierend oder zeitlich gemäß einem beliebigen, vorgegebenen Schema verteilt, an eine zugeordnete Akkumulationseinrichtung (117, 127, 137) aus der Mehrzahl (107) von Akkumulationseinrichtungen leitet, sodass die Akkumulationseinrichtung die Detektionssignale während des Abtastzeitfensters akkumuliert; wobei

die Auswerteeinrichtung (36) ein über eine, sich über viele Wiederholungen einer Sequenz von Abtastzeitfenstern erstreckende, Gesamtmessdauer erfasstes Gesamtsignal aus den in den Akkumulationseinrichtungen akkumulierten Detektionssignalen ermittelt,

**dadurch gekennzeichnet, dass**

eine Homogenisierungseinrichtung (80) vorhanden ist, mittels der die von der Empfangseinrichtung (14) bereitgestellten digitalen oder analogen Detektionssignale in homogenisierten Weise auswertbar sind, wobei diese Homogenisierungseinrichtung (80) dazu ausgelegt ist, die zeitlich schematisch wechselnde Zuordnung von Akkumulationseinrichtungen (117, 127, 137) aus der Mehrzahl von Akkumulationseinrichtungen zu Abtastzeitfenstern (115, 125, 135) während der Gesamtmessdauer zu variieren, wobei eine Periodendauer (tpa) einer sich zyklisch wiederholenden Sequenz (205) der Anzahl von Abtastzeitfenstern sich von der Periodendauer (tps) der modulierten Messstrahlung unterscheidet.

2. Messvorrichtung nach Anspruch 1, **dadurch gekennzeichnet, dass** die Homogenisierungseinrichtung (80) die schematisch wechselnde Zuordnung derart variiert, dass über die Gesamtmessdauer hinweg mehrere der Akkumulationseinrichtungen (117, 127, 137) etwa gleich häufig jedem der Abtastzeitfenster (115, 125, 135) zugeordnet ist.

3. Messvorrichtung nach Anspruch 1 oder 2, wobei die Gesamtmessdauer in mehrere Teilmessdauern (A), (B), (C) unterteilt ist und wobei innerhalb einer Teilmessdauer eine feste Phasenbeziehung zwischen der periodisch modulierten Messstrahlung und einer zyklischen Zuordnung der Akkumulationseinrichtungen zu Abtastzeitfenstern besteht und wobei zwischen verschiedenen Teilmessdauern eine relative Phasenverschiebung dieser Phasenbeziehung besteht.

4. Messvorrichtung nach Anspruch 3, wobei zwischen Teilmessdauern (A), (B), (C) eine relative Phasenverschiebung von $2\pi/n$ besteht, wobei n die Anzahl der Teilmessdauern ist.

5. Messvorrichtung nach einem der Ansprüche 1 bis 4, wobei die zeitlich schematisch wechselnde Zuordnung von Akkumulationseinrichtungen zu Abtastzeitfenstern mit der modulierten Messstrahlung synchronisiert ist.

6. Messvorrichtung nach einem der Ansprüche 1 bis 5, wobei die Anzahl an Abtastzeitfenstern und die Anzahl an Akkumulationseinrichtungen gleich ist.

7. Messvorrichtung nach einem der Ansprüche 1 bis 5, wobei die Anzahl an Abtastzeitfenstern und die Anzahl an Akkumulationseinrichtungen ungleich ist.

8. Messvorrichtung nach einem der Ansprüche 1 bis 7, wobei die Detektionssignale von der Empfangseinrichtung durch Multiplexer an die Akkumulationseinrichtungen geleitet werden.

## Claims

1. Measuring device (10) for distance measurement, in particular handheld measuring device for optical distance measurement, comprising:

a transmitting device (12) for transmitting periodically modulated optical measurement radiation (13) toward a target object (15); a receiving device (14) for detecting optical measurement radiation (16) returning from the target object (15) wherein the receiving device (14) comprises at least one SPAD; and an evaluation device (36) for receiving and evaluating detection signals of the receiving device (14);

wherein the evaluation device (36) comprises a plurality of accumulation devices (107, 207) for accumulating detection signals; wherein the evaluation device (36) conducts detection signals during a sampling time window (115, 125, 135) from a plurality (105) of sampling time windows temporally schematically changeably, in particular cyclically, in a temporally permuting manner or in a manner distributed temporally in accordance with an arbitrary predefined scheme, to an assigned accumulation device (117, 127, 137) from the plurality (107) of accumulation devices, such that the accumulation device accumulates the detection signals during the sampling time window;

wherein

the evaluation device (36) determines a total signal, acquired over a total measurement duration extending over many repetitions of a sequence of sampling time windows, from the detection signals accumulated in the accumulation devices,

**characterized in that**

a homogenizing device (80) is present by means of which the digital or analog detection signals provided by the receiving device (14) can be evaluated in a homogenized manner, wherein said homogenizing device, (80) is designed to vary the temporally schematically changeable assignment of accumulation devices (117, 127, 137) from the plurality of accumulation devices to sampling time windows (115, 125, 135) during the total measurement duration, wherein a period duration (tpa) of a cyclically repeating sequence (205) of the number of sampling time windows differs from the period duration (tps) of the modulated measurement radiation.

2. Measuring device according to Claim 1, **characterized in that** the homogenizing device (80) varies the schematically changeable assignment in such a way that over the total measurement duration a plurality of the accumulation devices (117, 127, 137) are assigned approximately equally often to each of the sampling time windows (115, 125, 135).

3. Measuring device according to Claim 1 or 2, wherein the total measurement duration is subdivided into a plurality of partial measurement durations (A), (B), (C) and wherein, within a partial measurement duration, there is a fixed phase relationship between the periodically modulated measurement radiation and a cyclic assignment of the accumulation devices to sampling time windows and wherein, between different partial measurement durations, there is a relative phase shift in said phase relationship.

4. Measuring device according to Claim 3, wherein, between partial measurement durations (A), (B), (C), there is a relative phase shift of 2 n/n, wherein n is the number of partial measurement durations.

5. Measuring device according to any of Claims 1 to 4, wherein the temporally schematically changeable assignment of accumulation devices to sampling time windows is synchronized with the modulated measurement radiation.

6. Measuring device according to any of Claims 1 to 5, wherein the number of sampling time windows and the number of accumulation devices are identical.

7. Measuring device according to any of Claims 1 to 5, wherein the number of sampling time windows and the number of accumulation devices are not identical.

8. Measuring device according to any of Claims 1 to 7, wherein the detection signals are conducted from the receiving device to the accumulation devices through multiplexers

## Revendications

1. Arrangement de mesure (10) destiné à la télémétrie, notamment arrangement de mesure portatif destiné à la télémétrie optique, comprenant :

un dispositif d'émission (12) destiné à émettre un rayonnement de mesure (13) optique périodiquement modulé en direction d'un objet cible (15) ; un dispositif de réception (14) destiné à détecter le rayonnement de mesure (16) optique renvoyé par l'objet cible (15), le dispositif de réception (14) possédant au moins une SPAD ; et un dispositif d'interprétation (36) destiné à recevoir et à interpréter des signaux de détection du dispositif de réception (14) ;

le dispositif d'interprétation (36) possédant une pluralité de dispositifs d'accumulation (107, 207) destinés à accumuler des signaux de détection ; le dispositif d'interprétation (36) acheminant des signaux de détection pendant une fenêtre de palpage (115, 125, 135) parmi une pluralité (105) de fenêtres de palpage qui changent schématiquement dans le temps, notamment de manière cyclique, qui permutent dans le temps ou qui sont distribuées dans le temps conformément à un schéma quelconque prédéfini, à un dispositif d'accumulation (117, 127, 137) associé parmi la pluralité (107) de dispositifs d'accumulation, de sorte que le dispositif d'accumulation accumule les signaux de détection pendant la fenêtre de palpage ;

le dispositif d'interprétation (36) déterminant, à partir des signaux de détection accumulés dans les dispositifs d'accumulation, un signal total détecté sur une durée de mesure totale qui s'étend sur de nombreuses répétitions d'une séquence de fenêtres de palpage,

**caractérisé en ce que**

il existe un dispositif d'homogénéisation (80) au moyen duquel les signaux de détection numériques ou analogiques mis à disposition par le dispositif de réception (14) peuvent être interprétés de manière homogénéisée, ce dispositif d'homogénéisation (80) étant conçu pour faire varier l'association changeant schématiquement dans le temps de dispositifs d'accumulation (117, 127, 137) parmi la pluralité de dispositifs d'accumulation aux fenêtres de palpage (115, 125, 135) pendant la durée de mesure totale, une durée de période (tpa) d'une séquence qui se répète de manière cyclique (205) de la pluralité de fenêtres de palpage étant différente de la durée de période (tps) du rayonnement de mesure modulé.

2. Arrangement de mesure selon la revendication 1, **caractérisé en ce que** le dispositif d'homogénéisation (80) fait varier l'association changeant schématiquement de telle sorte que sur la durée de mesure totale, plusieurs des dispositifs d'accumulation (117, 127, 137) sont associés approximativement à la même fréquence à chacune des fenêtres de palpage (115, 125, 135).

3. Arrangement de mesure selon la revendication 1 ou 2, la durée de mesure totale étant divisée en plusieurs durées de mesure partielles (A), (B), (C) et une relation de phase fixe entre le rayonnement de mesure modulé périodiquement et une association cyclique des dispositifs d'accumulation aux fenêtres de balayage existant au sein d'une durée de mesure partielle et un déphasage de cette relation de phase existant entre différentes durées de mesure partielles.

4. Arrangement de mesure selon la revendication 3, un déphasage relatif de $2\pi/n$ existant entre des durées de mesure partielles (A), (B), (C), n étant le nombre des durées de mesure partielles.

5. Arrangement de mesure selon l'une des revendications 1 à 4, l'association changeant schématiquement dans le temps des dispositifs d'accumulation aux fenêtres de balayage étant synchronisée avec le rayonnement de mesure modulé.

6. Arrangement de mesure selon l'une des revendications 1 à 5, le nombre de fenêtres de balayage et le nombre de dispositifs d'accumulation étant égaux.

7. Arrangement de mesure selon l'une des revendications 1 à 5, le nombre de fenêtres de balayage et le nombre de dispositifs d'accumulation étant différents.

8. Arrangement de mesure selon l'une des revendications 1 à 7, les signaux de détection étant acheminés par le dispositif de réception aux dispositifs d'accumulation à travers un multiplexeur.

Fig. 1

Fig. 2

Fig. 3

Fig. 4

EP 2 558 883 B1

Fig. 5

Fig. 6

EP 2 558 883 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070182949 A1
- EP 1752793 A1